# EUROPEAN PATENT APPLICATION

(11) **EP 4 581 936 A1**
(43) Date of publication of application: **09.07.2025**
(21) Application number: 23859783.5
(22) Date of filing: 19.06.2023
(51) Int. Cl.: A23G 1/32, A23G 1/36, A23G 1/46

(54) **CHOCOLATE DOUGH, CHOCOLATE, AND CHOCOLATE CONFECTIONERY**

(30) Priority: 01.09.2022 JP 2022139385
(71) Applicant: Lotte Co., Ltd., Tokyo 160-0023 (JP)
(72) Inventor: MURAMATSU, Miki, Saitama-shi, Saitama 336-0027 (JP); SAMESHIMA, Kazuki, Saitama-shi, Saitama 336-0027 (JP); KORENAGA, Haruna, Saitama-shi, Saitama 336-0027 (JP); KATO, Masaki, Tokyo 160-0023 (JP)
(74) Representative: V.O.
(86) International application number: PCT/JP2023/022531
(87) International publication number: WO 2024/048013

(57) **Abstract**

A problem to be solved by the present invention is to provide chocolate having a good balance between cacao flavor and milk flavor. The above problem can be solved by chocolate base containing cacao mass, whole milk powder, cream powder, and butter milk powder.

## Description

### Technical Field

The present invention relates to chocolate base, chocolate, and chocolate confectionery.

### Background Art

For chocolate, various products and methods for producing them are known. For example, Patent Literature 1 discloses, for providing "a method for producing confectionery dough based on fat and oil, reduced in cacao mass-derived unfavorable flavor component and keeping a preferable flavor derived from milk constituents", "a method for producing confectionery dough based on fat and oil, containing cacao mass and 14 wt% or more of milk solids, comprising dividing a raw material into two; preparing a first fat-and-oil based confectionery dough and a second fat-and-oil based confectionery dough by a conching process separately in different conditions; followed by mixing the two fat-and-oil based confectionery doughs".

### Citation List

### Patent Literature

Patent Literature 1: JP 2006-166839 A

### Summary of Invention

### Technical Problem

As chocolate having a new taste, chocolate having a good balance between cacao and milk flavors has been desired. The cacao flavor herein means that cacao is contained in a large amount but a bitter flavor is not badly stuck out (while keeping aroma and rich taste derived from cacao). The milk flavor refers to a flavor derived from raw-milk. As a method for enhancing the cacao flavor, blending a large amount of cacao as a raw material is conceivable. However, in this method, a bitter flavor derived from cacao is stuck out; at the same time, the milk flavor of chocolate is rarely sensed. In contrast, as a method for enhancing the milk flavor, blending a large amount of whole milk powder is conceivable. However, in this method, the content of cacao is relatively reduced, with the result that cacao flavor is rarely sensed. As described above, it has been difficult to produce chocolate having a good balance between cacao and milk flavors.

In the circumstance, the present invention is directed to providing chocolate base, chocolate (particularly, milk chocolate), and chocolate confectionery (hereinafter, the chocolate base, chocolate, and chocolate confectionery will be collectively referred to as "chocolate products") having a good balance between cacao and milk flavors.

### Solution to Problem

As a result of intensive studies conducted by the present inventors, they found that when whole milk powder, cream powder, and butter milk powder are all used as dairy products in addition to cocoa mass, it is possible to obtain chocolate products having a good balance between cacao and milk flavors.

Note that, Patent Literature 1 discloses whole milk powder, cream powder, and butter milk powder as examples of components of chocolate, but does not disclose that all of them are used.

The present invention includes the following embodiments.
[1] Chocolate base containing:
   cacao mass;
   whole milk powder;
   cream powder; and
   butter milk powder.
[2] The chocolate base according to [1], in which
   an amount of the whole milk powder is 5.0 to 20.0 mass% based on the chocolate base,
   an amount of the cream powder is 1.0 to 8.2 mass% based on the chocolate base, and
   an amount of the butter milk powder is 1.0 to 9.5 mass% based on the chocolate base.
[3] The chocolate base according to [1] or [2], in which
   the amount of the whole milk powder is 10.0 to 13.3 mass% based on the chocolate base,
   the amount of the cream powder is 1.5 to 3.4 mass% based on the chocolate base, and
   the amount of the butter milk powder is 3.0 to 8.2 mass% based on the chocolate base.
[4] The chocolate base according to any one of [1] to [3], in which an amount of the cacao mass is 35 to 55 mass% based on the chocolate base.
[5] Chocolate containing the chocolate base according to any one of [1] to [4].
[6] Chocolate confectionery containing the chocolate base according to any one of [1] to [4].

### Advantageous Effects of Invention

According to the present invention, it is possible to provide chocolate products having a good balance between cacao and milk flavors.

### Description of Embodiments

Hereinafter, embodiments of the present invention will be specifically described, but the present invention is not limited to these embodiments, and can be modified in various ways without departing from the gist thereof.

### <Definitions>

"Fair Competition Code on Labeling of Chocolate Products"

The definitions of cacao mass, chocolate base, chocolate, chocolate confectionery, and milk chocolate follow the "Fair Competition Code of Labeling of Chocolate Products" (partially modified on December 10, 2021). Specific definitions of these are as follows. The definitions of terms included in the following definitions also follows the aforementioned Code.

The "cacao mass" refers to a mass (including a mass treated with e.g., an alkali) obtained by grinding cacao nib (refers to cacao pieces prepared by removing shells from cacao beans as technically as possible) by a mechanical means without removing or adding any component thereof.

The "chocolate base" is a product produced by adding, to cacao mass, cocoa butter, cocoa cake, or cocoa powder prepared from cacao beans used as a raw material, for example, saccharides, dairy products, edible fats and oils except cocoa butter, flavors as needed, and subjecting the mixture to a production process routinely employed.

The "chocolate base" may have a cocoa content of 35% or more (the content of cocoa butter is 18% or more) based on the total weight thereof, and a moisture content of 3% or less based on the total weight (note that as long as the cocoa content is not less than 21% (the content of cocoa butter is 18% or more) based on the total weight and the sum of the cocoa content and the milk solids is not less than 35% (milkfat is 3% or more) based on the total weight, the milk solids can be used instead of the cocoa content).

The "chocolate" refers to chocolate base alone and processed products of chocolate containing 60% or more of the chocolate base based on the total weight.

The "chocolate confectionery" refers to a processed product of chocolate containing less than 60% of chocolate base based on the total weight.

The "milk chocolate" refers to chocolate containing 14% or more of the milk solids of the chocolate base based on the weight of the chocolate base (milkfat content is 3% or more based on the weight of the chocolate base).

"Ministerial Ordinance Concerning Compositional Standards of Milk and Milk Products"

The definitions of "whole milk powder", "cream powder", and "butter milk powder" follow the "Ministerial Ordinance concerning Ingredient Standards of Milk and Milk Products" (partially revised on December 4, 2020). Specific definitions of these are as follows. The definitions of terms included in the following definitions also follows the aforementioned Ministerial Ordinance.

The "whole milk powder" refers to a powdered milk obtained by almost completely removing the moisture content from raw milk, cow's milk, special cow's milk, or raw buffalo milk followed by grinding.

The "cream powder" refers to a powdered milk obtained by removing components except the milkfat from raw milk, cow milk, special cow milk, or raw buffalo milk, and then almost completely removing moisture content, followed by grinding.

The "butter milk powder" refers to a powdered milk obtained by almost completely removing the moisture content from butter milk, followed by grinding.

### <Chocolate Base>

An embodiment of the present invention relates to chocolate base containing cacao mass, whole milk powder, cream powder, and butter milk powder.

In the chocolate base according to the present embodiment, whole milk powder, cream powder, and butter milk powder are all used in addition to cacao mass. As a result, well balanced cacao flavor and milk flavor can be obtained.

The reason why well balanced cacao flavor and milk flavor can be obtained is conceivable that since milk raw materials different in flavor are mixed, there is a time lag between sensing the milk flavor from chocolate products and sensing other flavors, with the result that the cacao flavor is sensed and thereafter the milk flavor is sensed. However, the present invention is not limited by the above conceivable reason.

The amount of cacao mass is preferably 35 to 55 mass%, more preferably 37.5 to 52.5 mass%, and still more preferably 40 to 50 mass% based on the chocolate base.

The amount of the whole milk powder is preferably 3.0 to 25.0 mass%, more preferably 5.0 to 20.0 mass%, and still more preferably 10.0 to 13.3 mass% based on the chocolate base.

The amount of the cream powder is preferably 0.5 to 10.0 mass%, more preferably 1.0 to 8.2 mass%, and still more preferably 1.5 to 3.4 mass% based on the chocolate base.

The amount of the butter milk powder is preferably 0.5 to 10.0 mass%, more preferably 1.0 to 9.5 mass%, and still more preferably 3.0 to 8.2 mass% based on the chocolate base.

When the amounts of the cacao mass, whole milk powder, cream powder, and butter milk powder fall within the above ranges, the balance between cacao flavor and milk flavor can be more improved.

The chocolate base may contain additional components. Examples of the additional components include cocoa butter, cocoa cake, cocoa powder, saccharides, dairy products (excluding whole milk powder, cream powder, and butter milk powder), edible fats and oils (excluding cocoa butter), emulsifiers, and flavors.

Although not particularly limited, it is preferable that the amount of milk solids in the chocolate base is 14 mass% or more based on the chocolate base, and the amount of milkfat in the chocolate base is 3 mass% or more based on the chocolate base.

### <Chocolate and Chocolate Confectionery>

An embodiment of the present invention relates to chocolate containing the chocolate base.

An embodiment of the present invention relates to chocolate confectionery containing chocolate base.

Examples of the chocolate and chocolate confectionery include products obtained by mixing or kneading food in chocolate base; products obtained by forming a shell of chocolate base and putting food inside; products obtained by covering food with chocolate base; products obtained by covering chocolate base with food; and products obtained by joining chocolate base to food. Examples of the food include nuts, fruits, liquids, candies, biscuits, and saccharides.

### Examples

Hereinafter, the present invention will be described in more detail with reference to Examples and Comparative Examples, but the technical scope of the present invention is not limited thereto.

### <Production of Chocolate>

Chocolate was produced using cocoa butter (8 mass%), sugar (28 mass%), edible fat and oil (1 mass%), emulsifier (0.2 mass%), and flavor (0.1 mass%), and cacao mass, whole milk powder, cream powder, and butter milk powder (the amounts of these are shown in Table 1 below). The chocolates of the following Examples and Comparative Examples satisfy the above definition of "chocolate base". [Table 1]

**Table 1**

| | Comparative Example 1 | Comparative Example 2 | Example 1 | Example 2 |
|---|---|---|---|---|
| Cacao mass (mass%) | 43 | 43 | 43 | 43 |
| Whole milk powder (mass%) | 19.7 | 17 | 13.3 | 10 |
| Cream powder (mass%) | 0 | 0 | 3.4 | 1.5 |
| Butter milk powder (mass%) | 0 | 2.7 | 3.0 | 8.2 |

### <Evaluation of Chocolate>

Seven panelists who had been trained in advance for this sensory evaluation, tasted the chocolate produced in each of Examples and Comparative Examples, and evaluated the intensity of sweetness, intensity of bitterness, intensity of raw-milk flavor, and the speed of development of aroma (milk flavor and vanilla flavor). The evaluation criteria and evaluation results of individual evaluation items are as follows. The chocolate of Comparative Example 1 was used as a control.

### [Intensity of Sweetness]

Point 3: Significantly stronger than control
Point 2: Stronger than control
Point 1: Slightly stronger than control
Point 0: Substantially the same as control

**[Table 2]**

| Table 2: Intensity of Sweetness | | | |
|---|---|---|---|
| | Comparative Example 2 | Example 1 | Example 2 |
| Panelist 1 | 0 | 3 | 3 |
| Panelist 2 | 0 | 3 | 3 |
| Panelist 3 | 0 | 3 | 3 |
| Panelist 4 | 0 | 3 | 2 |
| Panelist 5 | 0 | 3 | 3 |
| Panelist 6 | 0 | 3 | 3 |
| Panelist 7 | 0 | 3 | 3 |
| Average point | 0.0 | 3.0 | 2.9 |

### [Intensity of Bitterness]

Point 3: Significantly weaker than control
Point 2: Weaker than control
Point 1: Slightly weaker than control
Point 0: Substantially the same as control

**[Table 3]**

| Table 3: Intensity of Bitterness | | | |
|---|---|---|---|
| | Comparative Example 2 | Example 1 | Example 2 |
| Panelist 1 | 0 | 3 | 3 |
| Panelist 2 | 0 | 3 | 3 |
| Panelist 3 | 0 | 3 | 3 |
| Panelist 4 | 0 | 3 | 2 |
| Panelist 5 | 0 | 3 | 3 |
| Panelist 6 | 0 | 3 | 3 |
| Panelist 7 | 0 | 3 | 2 |
| Average point | 0.0 | 3.0 | 2.7 |

### [Intensity of Raw-milk Flavor]

Point 3: Significantly stronger than control
Point 2: Stronger than control
Point 1: Slightly stronger than control
Point 0: Substantially the same as control

**[Table 4]**

| Table 4: Intensity of Raw-milk Favor | | | |
|---|---|---|---|
| | Comparative Example 2 | Example 1 | Example 2 |
| Panelist 1 | 1 | 3 | 3 |
| Panelist 2 | 0 | 3 | 3 |
| Panelist 3 | 1 | 3 | 3 |
| Panelist 4 | 1 | 3 | 3 |
| Panelist 5 | 1 | 3 | 3 |
| Panelist 6 | 1 | 3 | 3 |
| Panelist 7 | 1 | 3 | 3 |
| Average point | 0.9 | 3.0 | 3.0 |

### [Speed of Aroma Development]

Point 3: Significantly faster than control
Point 2: Faster than control
Point 1: Slightly faster than control
Point 0: Substantially the same as control

**[Table 5]**

| Table 5: Speed of Aroma Development | | | |
|---|---|---|---|
| | Comparative Example 2 | Example 1 | Example 2 |
| Panelist 1 | 1 | 3 | 3 |
| Panelist 2 | 0 | 3 | 3 |
| Panelist 3 | 1 | 3 | 3 |
| Panelist 4 | 1 | 3 | 2 |
| Panelist 5 | 1 | 3 | 3 |
| Panelist 6 | 1 | 3 | 2 |
| Panelist 7 | 1 | 3 | 3 |
| Average point | 0.9 | 3.0 | 2.7 |

The compositions and evaluations of the chocolates of Examples and Comparative Examples are summarized in Table 6. As is understood from the results, when whole milk powder, cream powder, and butter milk powder are all used in addition to cacao mass, chocolate having a good balance between cacao flavor and milk flavor while suppressing bitterness were successfully produced. [Table 6]

**Table 6**

| | Comparative Example 1 | Comparative Example 2 | Example 1 | Example 2 |
|---|---|---|---|---|
| Cacao mass (mass%) | 43 | 43 | 43 | 43 |
| Whole milk powder (mass%) | 19.7 | 17 | 13.3 | 10 |
| Cream powder (mass%) | 0 | 0 | 3.4 | 1.5 |
| Butter milk powder (mass%) | 0 | 2.7 | 3.0 | 8.2 |
| Intensity of Sweetness (point) | - | 0.0 | 3.0 | 2.9 |
| Intensity of Bitterness (point) | - | 0.0 | 3.0 | 2.7 |
| Intensity of Raw-milk flavor (point) | - | 0.9 | 3.0 | 3.0 |
| Speed of Aroma Developing (point) | - | 0.9 | 3.0 | 2.7 |

## Claims

1. Chocolate base containing:
cacao mass;
whole milk powder;
cream powder; and
butter milk powder.

2. The chocolate base according to claim 1, wherein
an amount of the whole milk powder is 5.0 to 20.0 mass% based on the chocolate base,
an amount of the cream powder is 1.0 to 8.2 mass% based on the chocolate base, and
an amount of the butter milk powder is 1.0 to 9.5 mass% based on the chocolate base.

3. The chocolate base according to claim 1, wherein
the amount of the whole milk powder is 10.0 to 13.3 mass% based on the chocolate base,
the amount of the cream powder is 1.5 to 3.4 mass% based on the chocolate base, and
the amount of the butter milk powder is 3.0 to 8.2 mass% based on the chocolate base.

4. The chocolate base according to claim 1, wherein an amount of the cacao mass is 35 to 55 mass% based on the chocolate base.

5. Chocolate containing the chocolate base according to any one of claims 1 to 4.

6. Chocolate confectionery containing the chocolate base according to any one of claims 1 to 4.
